# EUROPÄISCHE PATENTSCHRIFT

(11) **EP 2 111 753 B1**
(45) Veröffentlichungstag und Bekanntmachung des Hinweises auf die Patenterteilung: **17.10.2012**
(21) Anmeldenummer: 09005764.7
(22) Anmeldetag: 24.04.2009
(51) Int. Cl.: A01K 63/04, C02F 1/00, C02F 1/32, C02F 3/32

(54) **Verfahren zur Steuerung des Algenwachstums**
Method for controlling the growth of algae
Procédé de contrôle de la croissance d'algues

(30) Priorität: 25.04.2008 DE 102008020859
(43) Veröffentlichungstag der Anmeldung: 28.10.2009
(73) Patentinhaber: IFE Innovative Forschungs- und Entwicklungs GmbH & Co. KG, 24955 Harrislee (DE)
(72) Erfinder: Willuweit, Thomas, 95030 Hof (DE); Griesbach, Ralf, 95030 Hof (DE); Agrawal, Ram Krishna, 89231 Neu-Ulm (DE)
(74) Vertreter: Isarpatent

(56) Entgegenhaltungen:
- JP-A- 2 207 898
- JP-A- 2003 199 455
- JP-A- 2004 159 575
- US-A- 5 176 100

## Beschreibung

Die vorliegende Erfindung betrifft ein Verfahren zur Steuerung des Algenwachstums in Wasserkörpern gemäß Oberbegriff von Patentanspruch 1.

Schöne Teiche mit klarem Wasser sind das Ziel aller Teichbesitzer. Die Pflege von Teichen, besonders wenn sie mit Fischen besetzt sind, ist aber mit typischen Problemen behaftet. Schwankende Sauerstoffversorgung, verursacht durch hohe Fischbesatzdichten und/oder massenhaft verrottende abgestorbene Algen, führen zu massiven Problemen bei den Lebewesen im Wasser. Lebende Algen sind für einen funktionierenden Gartenteich zwar unerlässlich, denn sie produzieren Sauerstoff und sind in der Nahrungskette das unterste Glied, jedoch führt ein ungebremstes Algenwachstum zu einer Erniedrigung der sog. Carbonathärte und zu pH-Wert-Schwankungen des Wassers, wodurch die Artenvielfalt reduziert wird und einzelne Algenarten massenhaft auftreten können. Die Fraßfeinde der Algen - die Kleinkrebschen - werden durch die pH-Wert-Schwankungen ebenfalls beeinträchtigt. Das sind die wichtigsten Gründe, warum Gartenteiche nicht ordentlich funktionieren.

Zur Algenbekämpfung werden im Stand der Technik häufig chemische Mittel wie Algizide oder auch physikalische Mittel wie Filter eingesetzt. Die Vorteile von Filtern sind die ökologische Unbedenklichkeit und die geringen Betriebskosten. Nachteile dagegen sind, dass nicht alle Algen abfiltrierbar sind, und dass die Filter leicht verstopfen.

Das Dokument JP2003199455 beschreibt ein aus der Stand der Technik bekannte Verfahren zur Steuerung des Algenwachstums in Wasserkörpern. In diesem Verfahren werden Algen nachts nur mit sichtbarem Licht beschienen.

Häufig werden die Filtersysteme auch mit einer Ultraviolettbeleuchtung kombiniert (sog. UV/Filtersysteme), so dass die nicht filtrierbaren Organismen wie Algen und Bakterien durch die UV-Strahlung abgetötet werden.

Die im Stand der Technik bekannten UV/Filtersysteme sind allerdings mit dem Nachteil behaftet, dass durch das UV-Licht die sog. Carbonathärte (KH) des Wassers erniedrigt wird. Unter der Carbonathärte (KH) versteht man die Konzentration an Calciumhydrogencarbonat im Wasser. Die Carbonathärte ist ein Stabilitätskriterium für Teiche - sie macht das Teichwasser stabil gegen pH-Wert-Schwankungen. Nur in ausreichend hartem und gepuffertem Teichwasser (pH 7,5 - 8,5, Carbonathärte 5) funktionieren Selbstreinigungsmechanismen und ökologische Kreislaufprozesse.

Außerdem werden durch die durch das UV-Licht abgetöteten Algen und Mikroorganismen Nährstoffe freigesetzt.

Aufgabe der Erfindung ist die Vermeidung der oben erörterten Probleme des Standes der Technik.

Erfindungsgemäß wird diese Aufgabe durch ein Verfahren zur Bekämpfung des Algenwachstums in Wasser gemäß Patentanspruch 1 gelöst.

Die mit der Erfindung erzielten Vorteile sind, das die durch das UV-Licht verursachte Erniedrigung der Carbonathärte und des Sauerstoffgehalts des Wassers verringert werden. Dadurch wird das Teichwasser stabilisiert, die Artenvielfalt erhalten und übermäßiges Algenwachstum, insbesondere von Fadenalgen, verhindert.

Vorteilhafte und/oder bevorzugte Ausführungsformen der Erfindung sind Gegenstand der Unteransprüche.
Figuren 1 a und b zeigen den zeitlichen Verlauf der Leitfähigkeit in einer Reihe von Versuchsteichen (mit und ohne Fischbesatz) mit am Tage eingeschalteter (Stand der Technik) bzw. ausgeschalteter UV-Beleuchtung im UV/Filtersystem (nach einer Ausführungsform der Erfindung).
Figuren 2 a und b zeigen den zeitlichen Verlauf der Carbonathärte (KH) in einer Reihe von Versuchsteichen (mit und ohne Fischbesatz) mit am Tage eingeschalteter (Stand der Technik) bzw. ausgeschalteter UV-Beleuchtung im UV/Filtersystem (nach einer Ausführungsform der Erfindung).
Figuren 3 a und b zeigen den zeitlichen Verlauf des pH-Werts in einer Reihe von Versuchsteichen (mit und ohne Fischbesatz) mit am Tage eingeschalteter (Stand der Technik) bzw. ausgeschalteter UV-Beleuchtung im UV/Filtersystem (nach einer Ausführungsform der Erfindung).

Die vorliegende Erfindung soll nun ohne Beschränkung und lediglich zur Veranschaulichung detaillierter erläutert werden.

Es ist klar, dass die Erfindung nicht nur auf Teiche, sondern allgemein auf Wässer angewendet werden kann. Unter Wässer im Sinne dieser Erfindung werden daher sowohl Süß- als auch Seewasseranlagen, natürliche Gewässer, Fischaufzuchtstationen einschließlich deren Bruthäuser, Aquarien, fischereitechnische Kreislaufanlagen usw. verstanden.

Zur Durchführung des erfindungsgemäßen Verfahrens wird eine erfindungsgemäße Vorrichtung am Teich angeordnet. Eine Pumpe saugt kontinuierlich algenhaltiges Teichwasser an, dass durch die Zulauföffnung der Filterkammer in diese eintritt. Der Betrieb der Pumpe erfolgt nach den Herstellerangaben. Alternativ ermittelt der Fachmann nach Maßgabe der praktischen Gegebenheiten durch einfache Versuche geeignete Betriebbedingungen. In der Filterkammer wird das algenhaltige Wasser mit Licht aus einer technischen Quelle, vorzugsweise UV-Licht, bestrahlt. Das verwendete Licht weist eine Wellenlänge im Bereich von 100 bis 380 nm (UV-Bereich), 100 bis 280 nm (UV-C-Bereich), insbesondere 256 nm auf. Das Wasser verläßt nach dem Durchtritt eines Filters mit zur Zurückhaltung von Algen geeigneter Porengröße die Filterkammer filtriert durch die Ablauföffnung und fließt wieder in den Teich. Nach dem erfindungsgemäßen Verfahren wird das Licht aus technischen Quellen zur Reduzierung des Algenwachstums durch eine geeignete Steuereinrichtung während der Nacht eingeschaltet

Die Steuereinrichtung kann z.B. eine programmierbare Schaltuhr umfassen, die das UV-Licht beispielsweise zum Zeitpunkt des Sonnenuntergangs an- und zum Zeitpunkt des Sonnenaufgangs wieder abschaltet. Es ist klar, dass der genaue Zeitpunkt von Sonnenauf- und -untergang von der Jahreszeit abhängig ist. Geeignete Schaltuhren sind im Handel erhältlich.

Alternativ kann die Steuereinrichtung auch einen lichtempfindlichen Sensor, z.B. eine Photozelle, umfassen, der beim Erreichen einer bestimmten Dunkelheit bzw. Helligkeit (in der Abend- bzw. Morgendämmerung) das Licht ein- bzw. ausschaltet. Geeignete Photozellen sind im Handel erhältlich.

Geeignet zur Durchführung des erfindungsgemäßen Verfahrens ist beispielsweise ein handelsübliches UVC/Filtersystem (Bezugsquelle z.B. Fa. Gardena), dass mit einer geeigneten Steuereinrichtung zum Ausschalten des UV-Lichts bei Tag bzw. Einschalten des UV-Lichts bei Nacht, und umgekehrt, ausgestattet wird. Das verwendete UV-Licht unterliegt keinen besonderen Beschränkungen solange es zum Abtöten von Algen und Mikroorganismen geeignet ist.

Die im Teichwasser befindlichen Algen, z.B. Grünalgen, werden durch den Filter zurückgehalten und so aus dem Teichwasser entfernt. Die abfiltrierten Algen, insbesondere Fadenalgen und sonstige Mikroorganismen, die sich in dem Wasser in der Filterkammer des UV/Filtersystems befinden, werden durch eingestrahltes UV-Licht abgetötet.

Nach dem erfindungsgemäßen Verfahren wird das UV-Licht durch eine geeignete Steuereinrichtung während des Tages aus- und während der Nacht eingeschaltet. Dadurch wird überraschenderweise im Vergleich zur herkömmlichen Dauerbestrahlung (d.h. Tag und Nacht) mit UV-Licht eine besonders effektive Reduzierung des Fadenalgenwachstums erreicht.

Ohne sich auf eine bestimmte Theorie festlegen zu wollen, wird folgende Erklärung gegeben.

Das sich auf dem Teichgrund befindende Sediment und Gestein ist mit Fadenalgen und anderen festsitzenden Algenarten besiedelt. Die Nährstoffzufuhr dieser festsitzenden Algenarten ist normalerweise diffusionskontrolliert, wodurch ihr Wachstum eingeschränkt wird. Beim herkömmlichen Betrieb eines UV/Filtersystems, d.h. mit UV-Licht-Dauerbestrahlung (Tag und Nacht) während des Filtrationsvorgangs, wird diese diffusionsbedingte Nährstofflimitation durch das kontinuierliche Anströmen der festsitzenden Algen mit Nährstoffen, die von den in dem UV/Filtersystem durch die UV-Bestrahlung abgetöteten Algen und Mikroorganismen freigesetzt werden oder schon im Wasser vorhanden sind, aufgehoben. Die Folge ist eine Massenentwicklung von Fadenalgen und anderen festsitzenden Algenarten.

Beim erfindungsgemäßen Verfahren wird dagegen tagsüber das UV-Licht des UV/Filtersystem ausgeschaltet, was zur Folge hat, dass während des Filtrationsvorgangs keine abfiltrierten Algen und Mikroorganismen abgetötet und Nährstoffe daraus freigesetzt werden. Dadurch wird während der Tageszeit, während der die von der Photosynthese abhängigen Fadenalgen wachsen können, die oben beschriebene diffusionskontrollierte Nährstofflimitation nicht aufgehoben, so dass deren Wachstum eingeschränkt bleibt. Wenn nach dem erfindungsgemäßen Verfahren während der Nachtzeit das UV-Licht des UV/Filtersystem eingeschaltet wird, werden abfiltrierte Algen und Mikroorganismen abgetötet und die Nährstoffe daraus freigesetzt. Jedoch können diese von den von der Photosynthese abhängigen Fadenalgen, die daher Nachts nicht wachsen können, nicht genutzt werden und verteilen sich im gesamten Wasser. Eine Massenentwicklung von Fadenalgen (und anderen festsitzenden Algenarten) findet daher nicht statt.

Der umgekehrte Effekt, nämlich eine Steigerung des Fadenalgenwachstums tritt ein, wenn das UV-Licht des UV/Filtersystem während der Nacht ausgeschaltet und während des Tages eingeschaltet wird.

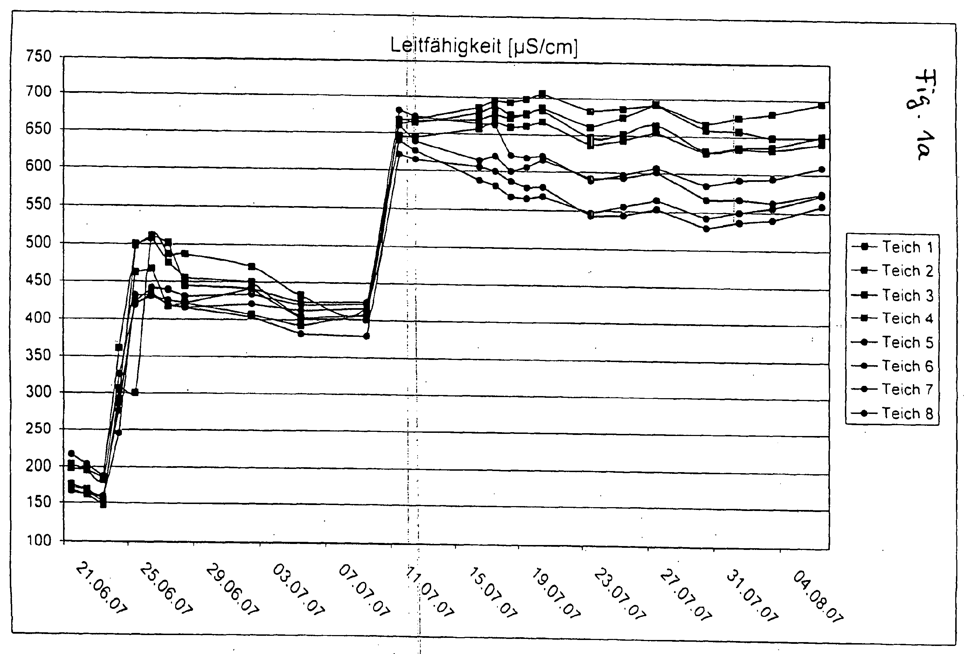

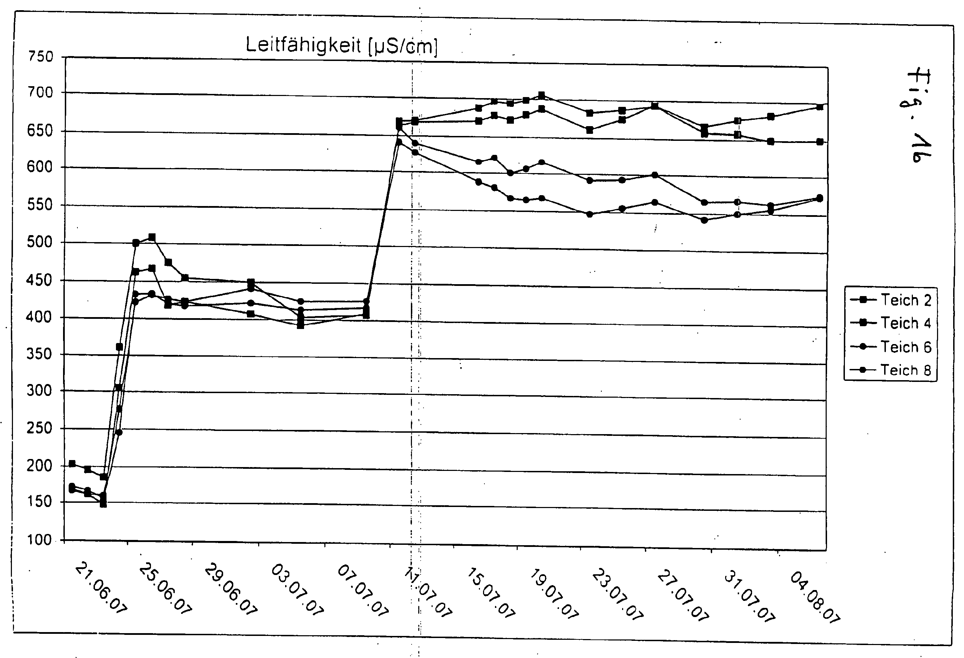

Figur 1 a zeigt den zeitlichen Verlauf der Leitfähigkeit in einer Reihe von Versuchsteichen mit am Tage eingeschalteter (Teiche 5 bis 8, Stand der Technik) bzw. ausgeschalteter UV-Beleuchtung im UV/Filtersystem (Teiche 1 bis 4, nach einer Ausführungsform der Erfindung). Man sieht deutlich, dass nach dem erfindungsgemäßen Verfahren filtrierte Teiche eine höhere Leitfähigkeit aufweisen.

Figur 1b zeigt unter gleichen Bedingungen den zeitlichen Verlauf der Leitfähigkeit von Teichen mit Fischbesatz ab 25.6.07.

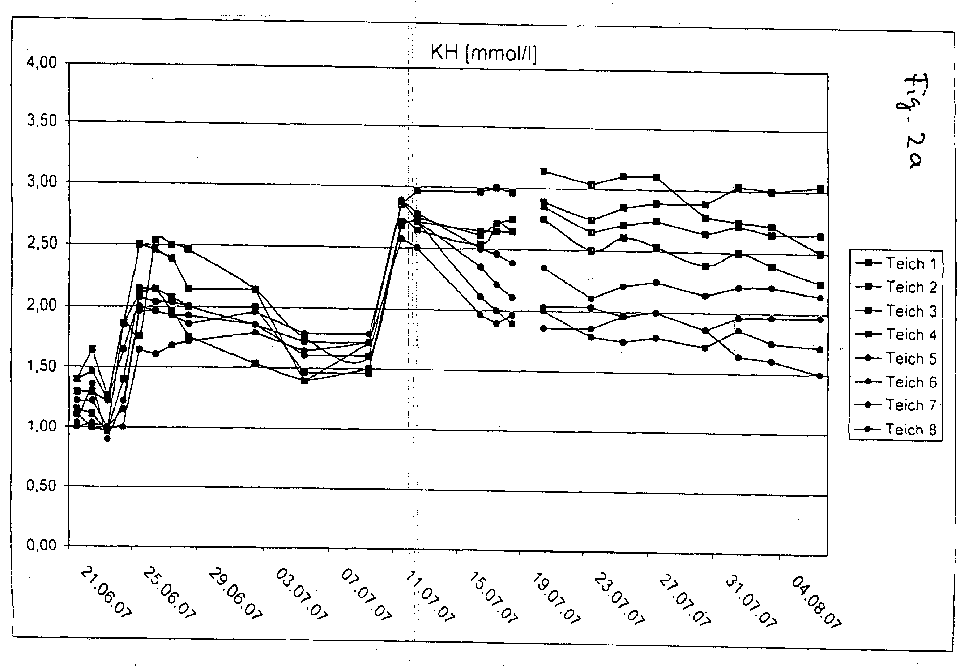

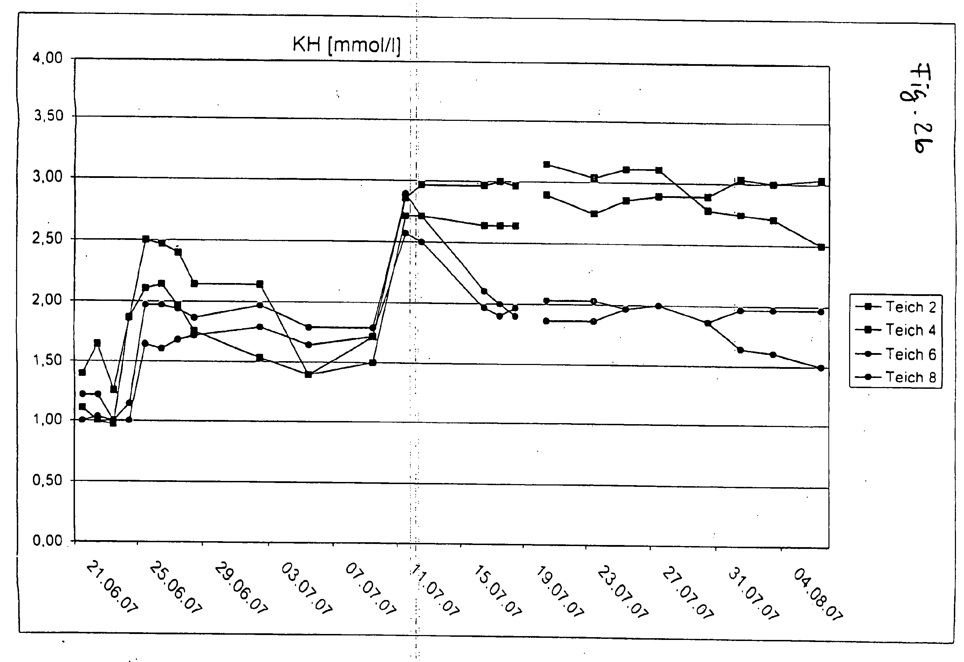

Figur 2 a zeigt den zeitlichen Verlauf der Carbonathärte (KH) in einer Reihe von Versuchsteichen mit am Tage eingeschalteter (Teiche 5 bis 8, Stand der Technik) bzw. ausgeschalteter UV-Beleuchtung im UV/Filtersystem (Teiche 1 bis 4, nach einer Ausführungsform der Erfindung). Man sieht deutlich, dass nach dem erfindungsgemäßen Verfahren filtrierte Teiche eine höhere Carbonathärte aufweisen. Die Carbonathärte ist ein Stabilitätskriterium für Teiche - sie macht das Teichwasser stabil gegen pH-Wert-Schwankungen. Nur in ausreichend hartem und gepuffertem Teichwasser funktionieren Selbstreinigungsmechanismen und ökologische Kreislaufprozesse. Der den im Stand der Technik bekannten UV/Filtersystemen anhaftende Nachteil, nämlich dass durch das UV-Licht die Carbonathärte des Wassers erniedrigt wird, wird erfindungsgemäß also vermieden. Eine Abnahme der Carbonathärte des Teichwassers hat zur Folge, dass das Teichwasser tendenziell alkalisch wird, so dass Selbstreinigungsmechanismen und ökologische Kreislaufprozesse beeinträchtigt werden. Die Folge kann übermäßiges Algenwachstum, insbesondere von Fadenalgen, sein.

Figur 2b zeigt unter gleichen Bedingungen den zeitlichen Verlauf der Carbonathärte von Teichen mit Fischbesatz ab 25.6.07.

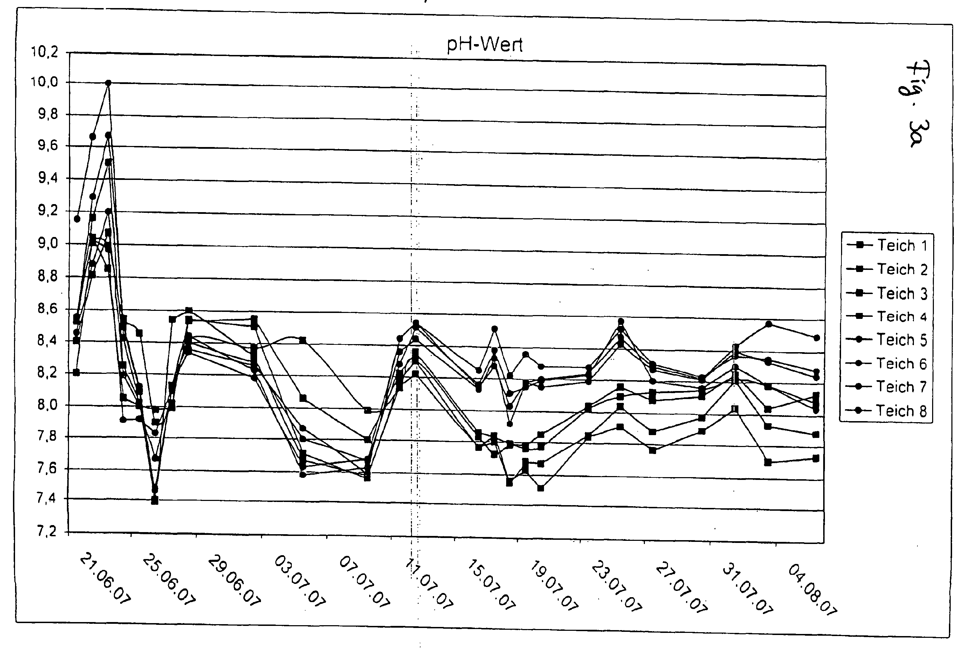

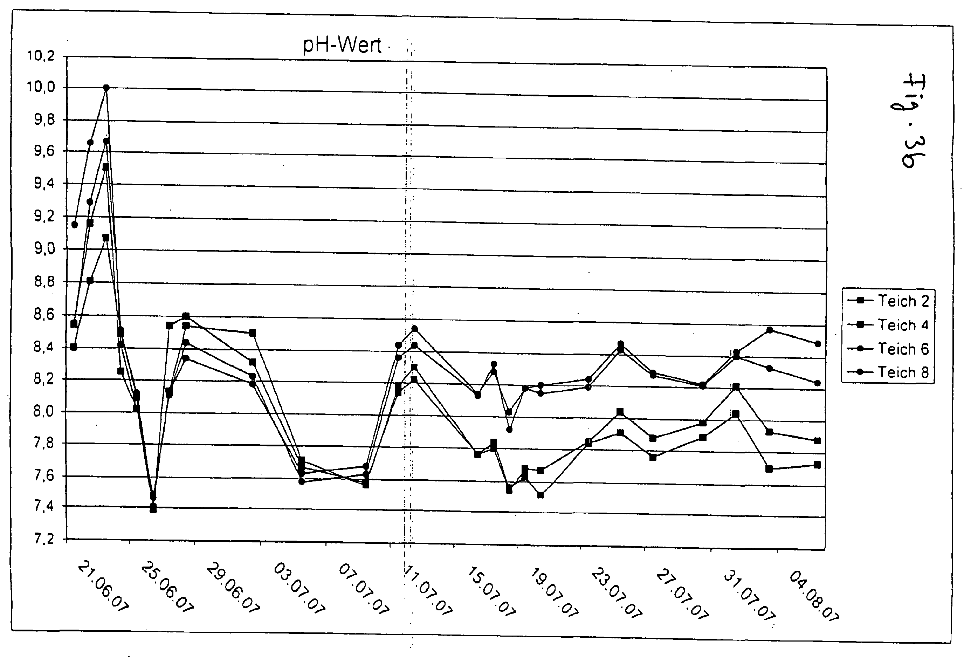

Figur 3 a zeigt den zeitlichen Verlauf des pH-Werts in einer Reihe von Versuchsteichen mit am Tage eingeschalteter (Teiche 5 bis 8, Stand der Technik) bzw. ausgeschalteter UV-Beleuchtung im UV/Filtersystem (Teiche 1 bis 4, nach einer Ausführungsform der Erfindung).

Man sieht deutlich, dass nach dem erfindungsgemäßen Verfahren filtrierte Teiche weniger alkalisch, d.h. stabiler gegen pH-Wert-Schwankungen sind.

Figur 3b zeigt unter gleichen Bedingungen den zeitlichen Verlauf des ph-Werts von Teichen mit Fischbesatz ab 25.6.07.

## Patentansprüche

1. Verfahren zur Steuerung des Algenwachstums in Wasserkörpern, bei dem algenhaltiges Wasser kontinuierlich durch ein Filtersystem mit mindestens einem Filter mit zur Zurückhaltung von Algen geeigneter Porengrösse und mit einer integrierten Einrichtung zur kontinuierlichen Bestrahlung des zu filtrierenden algenhaltigen Wassers mit Licht aus technischen Quellen geführt wird, **dadurch gekennzeichnet, dass**
das Licht aus technischen Quellen mit einer Wellenlänge im Bereich von 100 bis 380 nm zur Reduzierung des Algenwachstums durch eine geeignete Steuereinrichtung während der Nacht eingeschaltet und während des Tages ausgeschaltet wird.

2. Verfahren nach Anspruch 1, **dadurch gekennzeichnet, dass** das verwendete Licht aus technischen Quellen eine Wellenlänge im Bereich von 100 bis 280 nm hat.

3. Verfahren nach einem der vorstehenden Ansprüche, **dadurch gekennzeichnet, dass** die Ein- und Ausschaltung des Lichts aus technischen Quellen durch die Steuereinrichtung zeit- oder lichtabhängig erfolgt.

4. Verfahren nach Anspruch 3, **dadurch gekennzeichnet, dass** die zeitabhängige Steuerung durch eine programmierbare Schaltuhr und die lichtabhängige Steuerung durch einen lichtempfindlichen Sensor erfolgt.

5. Verfahren nach Anspruch 4, **dadurch gekennzeichnet, dass** der lichtempfindliche Sensor eine Photozelle ist.

6. Verfahren nach einem der vorstehenden Ansprüche, **dadurch gekennzeichnet, dass** es sich bei den Algen, deren Wachstum gesteuert werden soll, um Fadenalgen handelt.

## Claims

1. A method of controlling the growth of algae in bodies of water, in which algae-containing water is passed continuously through a filter system having at least one filter with a pore size suitable for retaining algae and having an integral device for continuously irradiating the algae-containing water to be filtered with light from artificial sources, **characterised in that**, to reduce the growth of algae, the light from artificial sources with a wavelength in the range from 100 to 380 nm is switched on during the night and off during the day by a suitable control device.

2. A method according to claim 1, **characterised in that** the light used from artificial sources has a wavelength in the range from 100 to 280 nm.

3. A method according to either one of the preceding claims, **characterised in that** the light from artificial sources is switched on and off by the control device in a time- or light-dependent manner.

4. A method according to claim 3, **characterised in that** time-dependent control proceeds by means of a programmable time switch and light-dependent control by means of a light-sensitive sensor.

5. A method according to claim 4, **characterised in that** the light-sensitive sensor is a photocell.

6. A method according to any one of the preceding claims, **characterised in that** the algae whose growth is to be controlled are filamentous algae.

## Revendications

1. Procédé pour contrôler la croissance d'algues dans des masses d'eau, dans lequel l'eau contenant des algues est acheminée en continu à travers un système de filtre comportant au moins un filtre dont la grosseur de pores est apte à retenir des algues et comportant un dispositif intégré pour irradier en continu l'eau à filtrer contenant des algues par une lumière provenant de sources techniques, **caractérisé en ce que**, par un dispositif de commande adapté, la lumière provenant de sources techniques est mise en marche la nuit à une longueur d'ondes allant de 100 à 380 nm pour réduire la croissance des algues et est arrêtée le jour.

2. Procédé selon la revendication 1, **caractérisé en ce que** la lumière utilisée provenant de sources techniques a une longueur d'ondes allant de 100 à 280 nm.

3. Procédé selon l'une des revendications précédentes, **caractérisé en ce que** la mise en marche et l'arrêt de la lumière provenant de sources techniques sont réalisés par le dispositif de commande en fonction du temps ou de la lumière.

4. Procédé selon la revendication 3, **caractérisé en ce que** la commande en fonction du temps est réalisée par une minuterie programmable et la commande en fonction de la lumière par un capteur photosensible.

5. Procédé selon la revendication 4, **caractérisé en ce que** le capteur photosensible est une cellule photo-électrique.

6. Procédé selon l'une des revendications précédentes, **caractérisé en ce que** les algues dont la croissance doit être contrôlée sont des algues filamenteuses.
